# EUROPEAN PATENT APPLICATION

(11) **EP 4 648 260 A1**
(43) Date of publication of application: **12.11.2025**
(21) Application number: 24174488.7
(22) Date of filing: 07.05.2024
(51) Int. Cl.: H02J 50/10, H02J 50/40, H02J 50/80, H04B 1/69, H04B 5/26, H02J 50/12

(54) **WIRELESS POWER TRANSFER**

(71) Applicant: Koninklijke Philips N.V., 5656 AG Eindhoven (NL)
(72) Inventor: AGAFONOV, Aleksei, 5656 AG Eindhoven (NL); VELTMAN, Eddy Gerrit, 5656 AG Eindhoven (NL); STARING, Antonius Adriaan Maria, 5656 AG Eindhoven (NL)
(74) Representative: Philips Intellectual Property & Standards

(57) **Abstract**

A power transmitter (201) wirelessly provides power to a plurality of power receivers (207, 209) comprising a plurality of transmitter coils (203, 205) generating power transfer signals for the power receivers and a communicator (309) for communicating with the power receivers (207, 209) including receiving load modulation messages from the power receivers (207, 209). A power transfer controller (307) initializes a power transfer with a first power receiver (207) using a predetermined default modulation scheme including transmitting a communication capability message to the first power receiver (207) which includes a capability to support a spread spectrum load modulation communication scheme and indicating a set of spreading chip sequences. The power receiver responds with a spread spectrum modulation request message from the first power receiver (207) and both devices then switch to use the spread spectrum load modulation communication scheme with at least a first spreading chip sequence from the set of spreading chip sequences.

## Description

### FIELD OF THE INVENTION

The invention relates to wireless power transfer and in particular, but not exclusively, to communication in a power transfer system such as a Qi wireless power transfer system.

### BACKGROUND OF THE INVENTION

Most present-day electrical products require a dedicated electrical contact in order to be powered from an external power supply. However, this tends to be impractical and requires the user to physically insert connectors or otherwise establish a physical electrical contact. Typically, power requirements also differ significantly, and currently most devices are provided with their own dedicated power supply resulting in a typical user having a large number of different power supplies with each power supply being dedicated to a specific device.

In order to provide a significantly improved user experience, it has been proposed to use a wireless power supply wherein power is inductively transferred from a transmitter coil in a power transmitter device to a receiver coil in the individual devices.

Such wireless power transfer arrangements may advantageously be designed such that the power transmitter device can be used with a range of power receiver devices. In particular, a wireless power transfer approach, known as the Qi Specifications, has been defined and is currently being further developed. This approach allows power transmitter devices that meet the Qi Specifications to be used with power receiver devices that also meet the Qi Specifications without these having to be from the same manufacturer or having to be dedicated to each other. The Qi standard further includes some functionality for allowing the operation to be adapted to the specific power receiver device (e.g. dependent on the specific power drain).

The Qi Specification is developed by the Wireless Power Consortium and more information can e.g. be found on their website: http://www.wirelesspowerconsortium.com/index.html, where in particular the defined Specification documents can be found.

In order to support efficient wireless power transfer, wireless power transfer systems, such as Qi, utilize substantial communication between the power transmitter and the power receiver. For communication systems such as Qi, communication from the power receiver to the power transmitter is arranged to use load modulation of the power transfer signal. Communication from the power transmitter to the power receiver may accomplished by modulating the power transfer signal using amplitude or frequency modulation.

Whereas communicating using load modulation of the power transfer signal that transfers power to the power receiver may provide efficient operation in many scenarios, it also tends to have some associated disadvantages. For example, the load modulation may tend to introduce some electrical noise including both noise to the signals of the devices as well as radiated electromagnetic noise. The load modulation may increase electromagnetic interference to other devices and maintaining sufficient or optimal electromagnetic compatibility has been found to be challenging.

It has also been found in practice that load modulation may result in the introduction of undesired spurious oscillations to the drive signal and the power transfer signal. The power transfer path in a wireless power transfer system tends to include a significant amount of inductance and tends to have a resonant behavior. As such load modulation tends to affect the power transfer path and indeed the communication path. Thus, the load modulation also results in noise and interference to the communication itself (self-interference).

Another disadvantage is that the load modulation of the power transfer signal may result in acoustic noise. Such noise may result from the impact on mechanical elements of the variations to the electromagnetic field caused by the load modulation, and specifically it may cause mechanical elements to move and vibrate resulting in potential acoustic noise being generated.

Also, load modulation communication, as e.g. used in the initial versions of the Qi Specifications, may not have perfect reliability and some bit errors tend to occur in some cases. For example, high levels of noise, interference or self-interference may result in bit errors and/or may require an increased modulation depth which may result in increased electrical or acoustic noise resulting from the load modulation.

In order to mitigate or reduce some disadvantageous effects of load modulation, it has been proposed to use a chip sequence based communication where each data symbol may be represented by a sequence of chips that are load modulated onto the power transfer signal. However, whereas this may improve communication in many implementations, it tends to not result in ideal performance in all situations and a number of disadvantages may persist. For example, whereas chip sequence based communication may provide improved characteristics in many practical scenarios, it is incompatible with existing approaches such as conventional NRZ (Non Return to Zero) modulation specified in the previous Qi Specifications. Accordingly, using chip sequence based communication will substantially reduce the compatibility with deployed power receivers.

In many applications, it is desired for a single power transmitter to support more than one power receiver at a given time and it has accordingly been proposed for a power transmitter to have multiple transmitter coils with each transmitter coil being able to support power transfer to a different power receiver by generating a power transfer signal for the individual power receiver. In such applications, the different power receivers need to communicate with the same power transmitter, and this introduces a number of challenges in order to ensure that the power transmitter reliably receives communication from a given power receiver in the presence of other communications. It is also essential that the power transmitter can determine from which power receiver the individual messages are received.

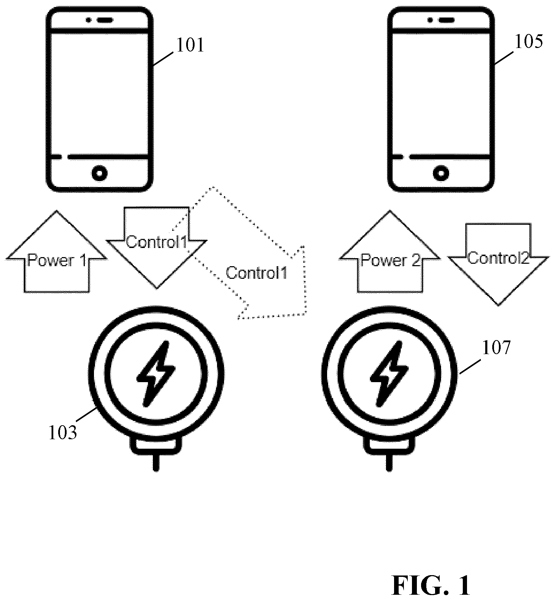

For example, FIG. 1 illustrates an example where one device 101 is powered by one power transfer coil 103 and another device 105 is powered by another power transfer coil 107 of the same power transmitter. The devices 101, 105 provide control signals by load modulating the electromagnetic field generated by the respective power transfer coil 103, 107. However, as the power transfer coils are typically in close proximity to each other, the load modulation of the control signals for one device 101 will typically affect the electromagnetic field at the other power transfer coil resulting in interference and potentially even the risk of messages transmitted by the first device 101 being estimated to originate from the second device resulting in unreliable and potential faulty power transfer operation.

This is a substantial problem in many practical applications as there is a great desire to provide e.g. 2-in-1 and 3-in-1 chargers, where a single physical unit implements multiple wireless charging transfer coils to deliver power to multiple devices. However, the communication, including the potential interference between these, in practice may degrade operation and may constrain the physical dimensions of the charging device with typically the minimum distance being limited by the requirements for reliable communication.

Hence, an improved approach would be advantageous, in particular, an improved approach for communication and/or load modulation for a wireless power transfer system supporting multiple power transfers allowing increased flexibility, reduced cost, reduced complexity, improved power transfer operation, increased reliability, reduced communication errors, improved backwards compatibility, improved electromagnetic compatibility, reduced electrical and/or acoustic noise, improved communication, a more stable power transfer, reduced power transfer variations, increased stability, improved support for multiple power transfers/power receivers, and/or improved performance would be advantageous.

### SUMMARY OF THE INVENTION

Accordingly, the Invention seeks to preferably mitigate, alleviate or eliminate one or more of the above mentioned disadvantages singly or in any combination.

According to an aspect of the invention, there is provided a power transmitter for wirelessly providing power to a plurality of power receivers via an electromagnetic power transfer signal, the power transmitter comprising: a plurality of transmitter coils each arranged to generate a power transfer signal for a power receiver of the plurality of power receivers when provided with a drive signal; a driver arranged to generate drive signals for the plurality of transmitter coils; a communicator for communicating with the plurality of power receivers, the communicator being arranged to receive messages from the plurality of power receivers by demodulating load modulation of the power transfer signals; a power transfer controller arranged to: initialize a power transfer with a first power receiver of the plurality of power receivers including receiving first messages from the first power receiver using a predetermined default modulation scheme; transmit a communication capability message to the first power receiver, the communication capability message comprising an indication of a capability to support a spread spectrum load modulation communication scheme for transmissions from the first power receiver to the power transmitter, the communication capability message comprising an indication of a set of at least one spreading chip sequence (for the spread spectrum load modulation communication scheme); receive a spread spectrum modulation request message from the first power receiver; in response to receiving the spread spectrum modulation request message, switch the communicator from a first mode in which messages from the first power receiver are received using the predetermined default modulation scheme to a second mode in which (subsequent) messages from the first power receiver are received using the spread spectrum load modulation communication scheme with at least a first spreading chip sequence from the set of spreading chip sequences.

The invention may provide improved performance in many wireless transfer applications and scenarios and particular for power transmitters arranged to simultaneously support a plurality of power transfers and power receivers. In particular, the approach may allow improved communication in many scenarios. The approach may allow, facilitate, or enable improved power transfer in many embodiments.

In many embodiments and scenarios, the approach may allow improved communication reliable and improve coexistence of power transfers in close proximity. It may for example allow transmitter coils of power transmitters having a plurality of such coils for different power transfers to be positioned closer to each other thereby allowing a more compact form factor and implementation. The approach may allow improved communication while providing improved backwards compatibility. It may allow facilitated deployment in mixed environments that may include both power receivers capable of supporting the spread spectrum load modulation communication scheme and power receivers not capable of supporting the spread spectrum load modulation communication scheme. The approach may in many scenarios reduce cross-interference between communications of simultaneous power transfers supported by the power transmitter.

The communicator may be arranged to transmit data to the power receiver using a frequency, amplitude, and/or phase modulation of the power transfer signal.

A predetermined default modulation scheme may be a reference, nominal, specific, predefined, pre-agreed, standardized, and/or designated modulation scheme. The predetermined default modulation scheme may be a legacy modulation scheme supported by all power receivers whereas the spread spectrum load modulation communication scheme may be a modulation scheme only supported by some power receivers.

The spreading chip sequences may for example be Barker sequences/codes, Gold codes, and/or M-sequences/codes.

According to an optional feature of the invention, the power transfer controller is arranged to select spreading chip sequences for the set of at least one spreading chip sequence depending on spreading chip sequences allocated for spread spectrum load modulation communication schemes for other power receivers of the plurality of power receivers.

This may provide particularly advantageous performance in many embodiments. It may in many scenarios and implementations provide a particularly efficient operation and support for multiple simultaneous power transfer operations. The feature may allow improved communication from a power receiver to a power transmitter and may in particular reduce cross-interference between communication for multiple simultaneous power transfer operations.

In many embodiments, the power transmitter may be arranged to select the set of at least one spreading chip sequence as a subset of a predetermined set of spread spectrum load modulation communication scheme, and specifically to select the subset the subset to only include spreading chip sequence not used/allocated to any other power transfer of the power transmitter.

According to an optional feature of the invention, the power transfer controller is arranged to select the first spreading chip sequence in dependence on a spreading chip sequence identification received from the power receiver.

This may provide particularly advantageous performance in many embodiments. It may in many scenarios and implementations provide a particularly efficient operation and support for multiple simultaneous power transfer operations. The feature may allow improved communication from a power receiver to a power transmitter.

According to an optional feature of the invention, the predetermined default modulation scheme is a non-spread spectrum modulation scheme.

This may provide particularly advantageous performance in many embodiments and may specifically in many scenarios provide increased backwards compatibility and facilitated deployment.

According to an optional feature of the invention, the predetermined default modulation scheme is a spread spectrum modulation scheme using a default spreading chip sequence.

This may provide particularly advantageous performance in many embodiments. It may in many scenarios and implementations provide a particularly efficient operation and support for multiple simultaneous power transfer operations. The feature may allow improved communication from a power receiver to a power transmitter. In particular, the feature may provide reduced cross-communication interference.

The default spreading chip sequence may be a predetermined/predefined default spreading chip sequence. The power transmitter may be arranged to exclude the default spreading chip sequence from the set of at least one spreading chip sequence. The default spreading chip sequence may be one only used by the predetermined default modulation scheme.

According to an optional feature of the invention, the power transfer controller is further arranged to change a frequency of the first power transfer signal when switching the communicator from the first mode to the second mode.

This may provide particularly advantageous performance in many embodiments. It may in many scenarios and implementations provide a particularly efficient operation and support for multiple simultaneous power transfer operations.

According to an optional feature of the invention, switching the communicator from the first mode to the second mode comprises re-initializing the power transfer.

This may provide particularly advantageous performance in many embodiments. The re-initializing of the power transfer may include receiving at least one message from the power receiver previously received using the predetermined default modulation scheme.

According to an optional feature of the invention, the communication capability message includes an indication of required modulation depth for spread spectrum load modulation by the first power receiver.

This may provide particularly advantageous performance in many embodiments. It may in many scenarios and implementations provide a particularly efficient operation and support for multiple simultaneous power transfer operations. The feature may e.g. allow improved communication from a power receiver to a power transmitter by adapting the communication performance to current conditions.

According to an optional feature of the invention, the power transmitter is a Qi power transmitter, and the communication capability message is one of a CAP message, ECAP message, and an XCAP message.

The approach may provide particularly advantageous performance for Qi compatible power transfer operations.

According to an optional feature of the invention, the power transfer controller is arranged to transmit the communication capability message in response to receiving a spread spectrum modulation request message from the first power receiver.

This may provide particularly advantageous performance in many embodiments.

According to an optional feature of the invention, the power transfer controller is further arranged to transmit a further communication capability message to the first power receiver while the communicator is in the second mode, and to change to use a different spreading chip sequence than the at least one spreading chip sequence in response to receiving a request for the different spreading chip sequence from the first power receiver, the different spreading chip sequence being a spreading chip sequence indicated as available in the further communication capability message.

This may provide particularly advantageous performance in many embodiments.

According to another aspect of the invention, there is provided a power receiver for wirelessly receiving power from a power transmitter via an electromagnetic power transfer signal, the power receiver comprising: an input circuit comprising a receiver coil arranged to extract power from the power transfer signal; a communicator arranged to communicate with the power transmitter using load modulation of the power transfer signal for transmissions to the power transmitter; a power transfer controller arranged to: initialize a power transfer with the power transmitter including transmitting first messages to the power transmitter using a predetermined default modulation scheme; receive a communication capability message from the power transmitter, the communication capability message comprising an indication of a capability by the power transmitter to support a spread spectrum load modulation communication scheme for transmissions from the power receiver to the power transmitter, the communication capability message further comprising an indication of a set of at least one spreading chip sequence; transmit a spread spectrum modulation request message to the power transmitter; in response to receiving a spread spectrum modulation confirmation message from the power transmitter, switch the communicator from transmitting messages to the power transmitter using the predetermined default modulation scheme to transmitting (subsequent) messages to the power transmitter using the spread spectrum load modulation communication scheme using at least one spreading chip sequence from the set of spreading chip sequences.

The power receiver may further comprise a circuit for providing the power extracted by the input circuit to a load.

According to an optional feature of the invention, the set of at least one spreading chip sequence comprises a plurality of spreading chip sequences and the power receiver is arranged to select a first spreading chip sequence from the set of at least one spreading chip sequences, and to include an indication of the first spreading chip sequence in the spread spectrum modulation request message.

This may provide particularly advantageous performance in many embodiments.

According to another aspect of the invention, there is provided a method of operation for a power transmitter wirelessly providing power to a plurality of power receivers via an electromagnetic power transfer signal, the power transmitter comprising: a plurality of transmitter coils each arranged to generate a power transfer signal for a power receiver of the plurality of power receivers when provided with a drive signal; a driver arranged to generate drive signals for the plurality of transmitter coils; a communicator for communicating with the plurality of power receivers, the communicator being arranged to receive messages from the plurality of power receivers by demodulating load modulation of the power transfer signals; and the method comprises: initializing a power transfer with a first power receiver of the plurality of power receivers including receiving first messages from the first power receiver using a predetermined default modulation scheme; transmitting a communication capability message to the first power receiver, the communication capability message comprising an indication of a capability to support a spread spectrum load modulation communication scheme for transmissions from the first power receiver to the power transmitter, the communication capability message comprising an indication of a set of at least one spreading chip sequence; receiving a spread spectrum modulation request message from the first power receiver; in response to receiving the spread spectrum modulation request message, switching the communicator from a first mode in which messages from the first power receiver are received using the predetermined default modulation scheme to a second mode in which (subsequent) messages from the first power receiver are received using the spread spectrum load modulation communication scheme with at least a first spreading chip sequence from the set of spreading chip sequences

According to another aspect of the invention, there is provided a method of operation for a power receiver wirelessly receiving power from a power transmitter via an electromagnetic power transfer signal, the power receiver comprising: an input circuit comprising a receiver coil arranged to extract power from the power transfer signal; a communicator arranged to communicate with the power transmitter using load modulation of the power transfer signal for transmissions to the power transmitter; and the method comprises: initializing a power transfer with the power transmitter including transmitting first messages to the power transmitter using a predetermined default modulation scheme; receiving a communication capability message from the power transmitter, the communication capability message comprising an indication of a capability by the power transmitter to support a spread spectrum load modulation communication scheme for transmissions from the power receiver to the power transmitter, the communication capability message further comprising an indication of a set of at least one spreading chip sequence; transmitting a spread spectrum modulation request message to the power transmitter; in response to receiving a spread spectrum modulation confirmation message from the power transmitter, switching the communicator from transmitting messages to the power transmitter using the predetermined default modulation scheme to transmitting messages to the power transmitter using the spread spectrum load modulation communication scheme using at least one spreading chip sequence from the set of spreading chip sequences

These and other aspects, features and advantages of the invention will be apparent from and elucidated with reference to the embodiment(s) described hereinafter.

### BRIEF DESCRIPTION OF THE DRAWINGS

Embodiments of the invention will be described, by way of example only, with reference to the drawings, in which:
FIG. 1 illustrates an example of elements of a wireless power transfer system supporting a plurality of power receivers;
FIG. 2 illustrates an example of elements of a wireless power transfer system in accordance with some embodiments of the invention;
FIG. 3 illustrates an example of elements of a power transmitter;
FIG. 4 illustrates an example of a half bridge inverter for a power transmitter;
FIG. 5 illustrates an example of a full bridge inverter for a power transmitter;
FIG. 6 illustrates an example of elements of a power receiver in accordance with some embodiments of the invention;
FIG. 7 illustrates an example of chip sequences; and
FIG. 8 illustrates an example of a message exchange for a wireless power transfer system in accordance with some embodiments of the invention.

### DETAILED DESCRIPTION OF THE EMBODIMENTS

The following description focuses on embodiments of the invention applicable to a wireless power transfer system utilizing a power transfer approach such as known from the Qi Specification. However, it will be appreciated that the invention is not limited to this application but may be applied to many other wireless power transfer systems.

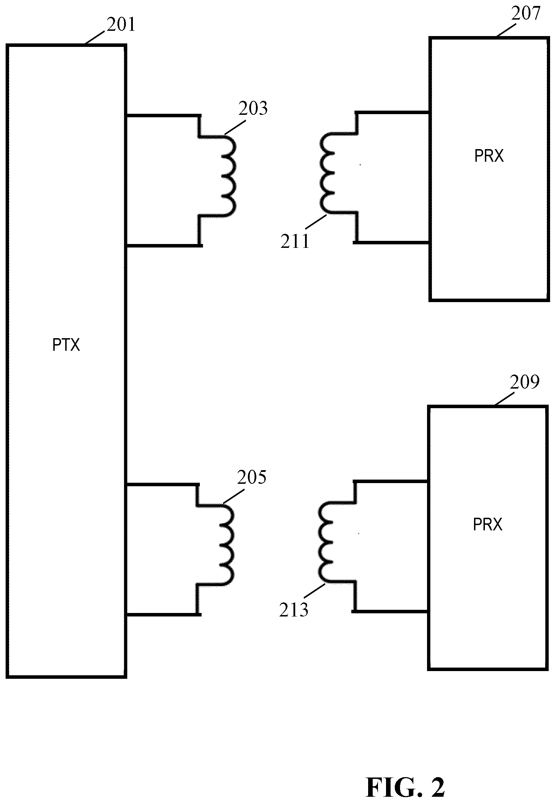

FIG. 2 illustrates an example of a power transfer system in accordance with some embodiments of the invention. The power transfer system comprises a power transmitter 201 which includes (or is coupled to) a plurality of transmitter coils / inductors of which two 203, 205 are shown. The system further comprises two power receivers 207, 209 which each include (or are coupled to) a receiver coil/ inductor 211, 213.

The power transmitter can from each power transmitter coil 203, 205 provide an inductive electromagnetic power transfer signal that may inductively transfer power from the power transmitter 201 to one of the power receivers 207, 209. Specifically, the power transmitter 201 from each transmitter coil 203,205 generates an electromagnetic signal, which is propagated as a magnetic flux by the transmitter coil or inductor 203, 205. The power transfer signal may typically have a frequency between around 20 kHz to around 500 kHz, and in many practical systems may be around 120-150 kHz. The given transmitter coil 203 (205) and the corresponding power receiving coil 211(213) are loosely coupled and thus the power receiving coil 211(213) picks up (at least part of) the power transfer signal from the power transmitter 201. Thus, the power is transferred from the power transmitter 201 to the individual power receiver 207, 209 via a wireless inductive coupling from a transmitter coil 203(205) to the corresponding power receiving coil 211(213). The term power transfer signal is mainly used to refer to the inductive signal! magnetic field between the transmitter coil and the power receiving coil (the magnetic flux signal), but it will be appreciated that by equivalence it may also be considered and used as a reference to an electrical signal provided to the transmitter coil or picked up by the power receiving coil.

In the example, each power receiver 207, 209 is specifically a power receiver that receives power via the receiver coil 211, 213. However, in other embodiments, a power receiver 207, 209 may comprise a metallic element, such as a metallic heating element, in which case the power transfer signal directly induces eddy currents resulting in a direct heating of the element.

In the following, the operation of the power transmitter 201 (including the transmitter coils 203, 205 and the power receivers 207, 209 will be described with specific reference to an embodiment generally in accordance with the Qi Specifications for wireless power transfer (except for the herein described (or consequential) modifications and enhancements).

Many wireless power transfer systems utilize resonant power transfer where the transmitter coil is part of a resonance circuit and typically the receiver coil is also part of a resonance circuit. In many embodiments, the resonance circuits may be series resonance circuits and thus the transmitter coil and the receiver coil may be coupled in series with a corresponding resonance capacitor. The use of resonance circuits tends to provide a more efficient power transfer.

Normally, a wireless power transfer system employs a power control loop in order to steer the system towards the appropriate operating point. This power control loop changes the amount of power that is transmitted from the power transmitter to the power receiver. The received power (or voltage or current) can be measured and together with the setpoint power value, an error signal can be generated. The power receiver sends this error signal to the power control function in the power transmitter to reduce the static error, ideally to zero.

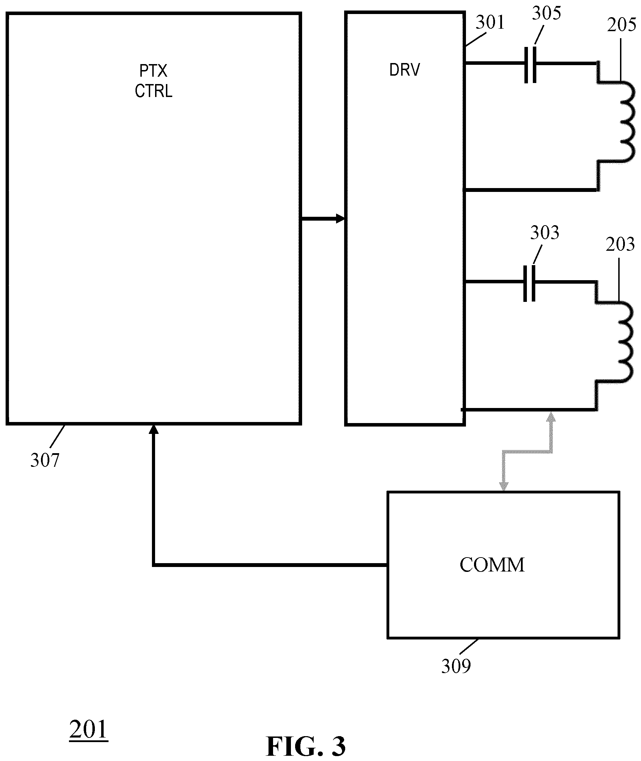

FIG. 3 illustrates an example of elements of the power transmitter 201 of FIG. 2 in more detail.

The power transmitter 201 includes a driver 301 which can generate a plurality of drive signals, each of which is fed to a transmitter coil 203, 205 which in return generates an electromagnetic power transfer signal thereby providing a power transfer to a power receiver 207, 209. The transmitter coils 203, 205 are part of an output resonance circuit which comprises the transmitter coil 203, 205 and a capacitor 303, 305. In the example, each output resonance circuit is a series resonance circuit, but it will be appreciated that in other embodiments, the output resonance circuit may be a parallel resonance circuit. It will be appreciated that any suitable resonance circuit may be used including one using multiple inductors and/or capacitors.

The following description will for clarity and brevity focus on one power transfer operation circuit/operation and one output resonance circuit. However, it will be appreciated that the description will also apply to the other power transfer operations/output circuits/power transfer signal. Thus, the described approach may be performed for each of the power transfer outputs/operations.

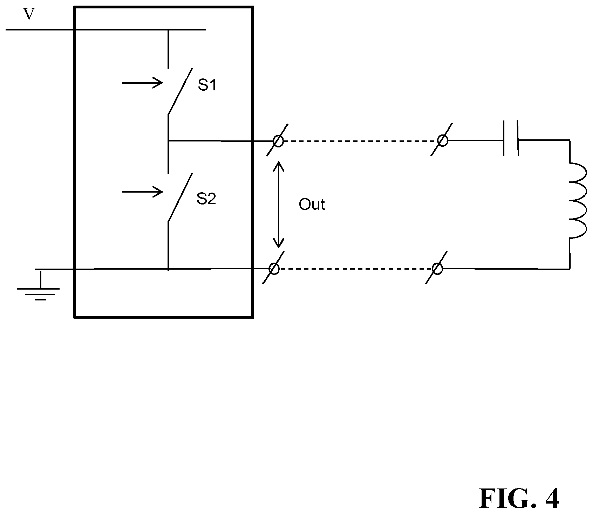

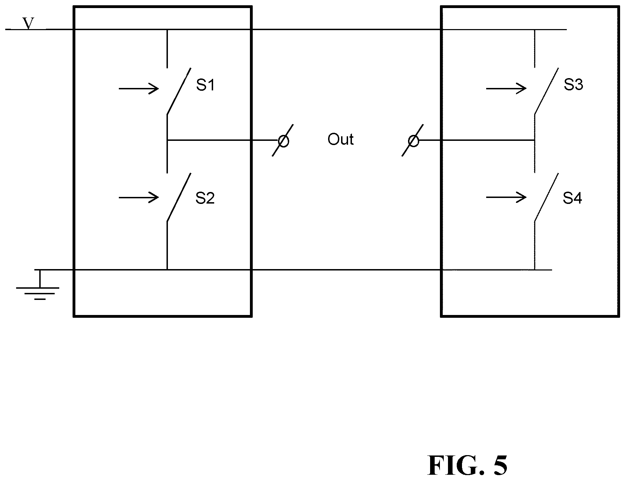

The driver 301 generates the current and voltage which is fed to the output resonance circuit and thus to the transmitter coil 203. The driver 301 is typically a drive circuit in the form of an inverter which generates an alternating signal from a DC Voltage. The output of the driver 301 is typically a switch bridge generating the drive signal by the appropriate switching of switches of the switch bridge. FIG. 4 shows a half-bridge switch bridge/ inverter. The switches S1 and S2 are controlled such that they are never closed at the same time. Alternatingly S1 is closed while S2 is open and S2 is closed while S1 is open. The switches are opened and closed with the desired frequency, thereby generating an alternating signal at the output. Typically, the output of the inverter is connected to the transmitter inductor via a resonance capacitor. FIG. 5 shows a full-bridge switch bridge/ inverter. The switches S1 and S2 are controlled such that they are never closed at the same time. The switches S3 and S4 are controlled such that they are never closed at the same time. Alternatingly switches S1and S4 are closed while S2 and S3 are open, and then S2 and S3 are closed while S1 and S4 or open, thereby creating a square-wave signal at the output. The switches are opened and closed with the desired frequency.

The power transmitter 201 further comprises a power transmitter controller 307 which is arranged to control the operation of the power transmitter 201 in accordance with the desired operating principles. Specifically, the power transmitter 201 may include many of the functionalities required to perform power control in accordance with the Qi Specification.

The power transmitter controller 307 is in particular arranged to control the generation of the drive signals by the driver 301, and it can specifically control the power level of the drive signals, and accordingly the level of the generated power transfer signals. The power transmitter controller 307 comprises a power loop controller controlling a power level of the power transfer signal for each power transfer operation in response to the power control messages received from the corresponding power receiver 207, 209 during the power transfer phase.

The power transmitter 201 further comprises a communicator, henceforth referred to as the first communicator 309, which is arranged to communicate with the power receivers currently supported/present. The first communicator 309 may transmit data to a power receiver 207, 209 by frequency modulating the power transfer signal generated by the transmitter coil 203, 205 supporting that power receiver 207, 209. For example, the first communicator 309 may control the driver to generate the power transfer signal for a given power receiver 207, 209 by changing the frequency of the corresponding power transfer signal dependent on the data to be transmitted. The communication may specifically use a Frequency Shift Keying (FSK) modulation scheme for transmitting data from the power transmitter to a power receiver.

The first communicator 309 may further be arranged to receive data transmitted to the power transmitter 201 from each supported/present power receiver 207, 209. The data is transmitted by load modulation where the power receiver 207, 209 changes a loading of the power transfer signal for the power receiver 207, 209 in accordance with the data symbols being communicated. The first communicator 309 includes a load modulation detector which is coupled to the output circuits 205, 305, 203, 303 and which is arranged to detect variations in/ perform measurements of the load of the power transfer signals. The load modulation detector may specifically measure the loading of the power transfer signal by measuring a power, current, and/or voltage for the appropriate transmitter coil 203, 205. It may specifically sample the load at given sample instants and determine the load value for the sample times accordingly. The first communicator 309 is arranged to determine received data symbols based on the detected loading values.

The received data symbols are fed from the first communicator 309 to the power transmitter controller 307 which may adapt the operation of the power transfers in response to this data. For example, power error data may be received and the power transmitter controller 307 may adapt the power level of the appropriate drive signal thereby implementing a power control loop with the given power receiver 203, 205.

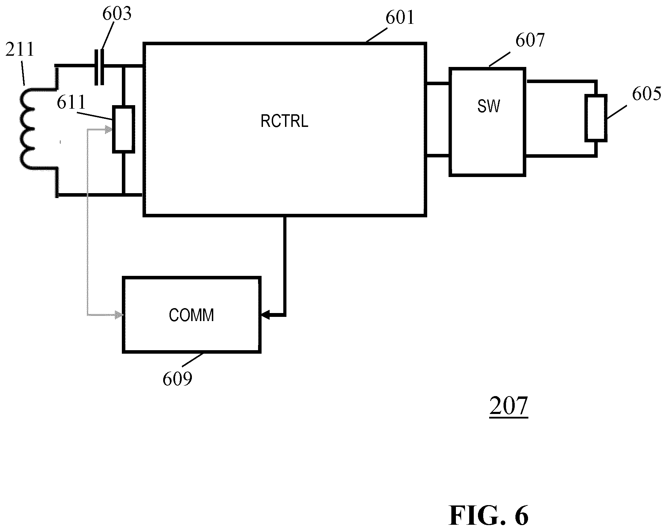

FIG. 6 illustrates some exemplary elements of the power receiver 207. The following description will also apply to power receiver 209 which may implement the same functions to enable wireless transfer in accordance with a suitable technical specification and in particular in accordance with the Qi Specifications.

In the example, the receiver coil 211 is coupled to a power receiver controller 601 via a capacitor 603 which together with the receiver coil 211 forms an input resonance circuit. Thus, the power transfer may be a resonant power transfer between resonance circuits. In other embodiments, only one, or none, of the power receiver and the power transmitter may utilize a resonance circuit for power transfer. The power receiver controller 601 couples the receiver coil 211 to a load 605 via a switch 607. The power receiver controller 601 includes a power control path which converts the power extracted by the receiver coil 211 into a suitable supply for the load 605. In some embodiments, the power receiver controller 601 may provide a direct power path which simply connects the input resonance circuit to the switch 607 or load 605, i.e. the power path of the power receiver controller 601 may simply be implemented by two wires. In other embodiments, the power path may include e.g. rectifiers and possibly smoothing capacitors to provide a DC voltage. In yet other embodiments, the power path may include more complex functions, such as e.g. voltage control circuitry, impedance matching circuitry, current control circuitry etc. Similarly, it will be appreciated that the switch 607 may only be present in some embodiments and that in some embodiments the load 605 may permanently be coupled to the input resonance circuit.

In addition, the power receiver controller 601 may include various power receiver controller functionality required to perform power transfer, and in particular functions required to perform power transfer in accordance with the Qi Specifications.

The power receiver 205 is arranged to transmit data to the power transmitter 201. Such data may specifically include power control loop error messages used to implement a feedback power loop for controlling the power level of the power transfer signal during power transfer as will be known to the skilled person. The power receiver may in many embodiments be capable of transmitting a range of different messages serving different purposes as known to the skilled person. For example, a range of different messages such as those specified in the Qi Specifications may be transmitted. Messages may comprise one or more data bits/ symbols.

The power receiver is arranged to transmit messages to the power transmitter using load modulation. As will be well known to the skilled person, for load modulation, changes in the loading of the power transfer signal may be introduced by the power receiver where the changes are in accordance with data values to be transmitted. These changes can then be detected by the power transmitter in order to decode the data from the power receiver.

Load modulation may be used as the method for the power receiver to communicate control messages, or other data, to the power transmitter in accordance with e.g. the Qi wireless power standard.

There are typically two main ways of performing load modulation, namely either to directly change the resistive load/ power extraction of the input circuit and/or to detune the resonance of the input circuit e.g. by changing a reactive loading of the input circuit (typically switching a capacitor in/out in line with data to be transmitted). Similar approaches may be used by the power receiver for load modulating the power transfer signal. Thus, load modulation may use real and/or reactive load changes.

Correspondingly, at the power transmitter, detection approaches may as mentioned be used to detect the load variations. For example, a direct measurement of a power level or current amplitude of the drive signal may be used as indications of the loading, and thus of the load modulation variations introduced by the power receiver.

The power receiver 205 accordingly comprises a communicator, henceforth referred to as the second communicator 609, which is arranged to transmit data to the power transmitter 201 by load modulating the power transfer signal.

In the example, the second communicator 609 is arranged to control a variable load 611 that provides a modulation loading of the power transfer signal. Variations in the value of the variable load 611 results in a changed effective load provided to the receiver coil 211. As a result, the induced power (real and/or reactive) changes and thus the loading of the power transfer signal by the receiver coil 211 changes. The loading of the receiver coil 21 1/the power transfer signal is dependent on the value of the variable load. Specifically, changes in the value of the variable load results in changes in the loading of the power transfer signal. The second communicator 609 is arranged to load modulate the power transfer signal by varying the value of the variable load thereby varying the modulation loading of the power transfer signal. The modulation loading is a variable loading of the power transfer signal providing the load modulation of the power transfer signal. The modulation loading can be considered to be/correspond to/ represent a load and/or impedance value of the variable load.

Thus, the second communicator 609 is arranged to change the value of the variable load in dependence on data symbol values being transmitted thereby providing a varying modulation loading of the power transfer signal.

The second communicator 609 is coupled to the variable load 611 and is arranged to modify this in response to the data symbols to be transmitted. Thus, the second communicator 609 is arranged to vary the variable load to provide a modulation loading of the power transfer signal.

The second communicator 609 may further be arranged to demodulate data symbols transmitted from the power transmitter 201. Specifically, the power transmitter 201 may modulate data on to the power transfer signal using frequency modulation (and specifically using FSK) and the second communicator 609 may measure the frequencies of the power transfer signal and detect the data symbols represented by the frequency variations.

In the approach, the communication from the power receiver to the power transmitter may be performed using a spread spectrum load modulation communication scheme for at least some transmissions/ data messages.

A spread spectrum load modulation communication scheme, which in the specific example may be a Direct Sequence Spread Spectrum (DSSS) or specifically a Differential Direct Sequence Spread Spectrum (DDSSS) modulation scheme, may be one in which each data symbol is represented by a spreading chip sequence (which may also be referred to as a modulation chip sequence) with the specific pattern of the chip sequence being dependent on the data symbol being transmitted.

As will be described in more detail later, the second communicator 609 may specifically be arranged to provide a spreading chip sequence/ modulation loading pattern/modulation chip sequence for each data symbol where the spreading chip sequence /modulation loading pattern/ modulation chip sequence is dependent on the data symbol value. The spreading chip sequence/modulation loading pattern/ modulation chip sequence is different for different data symbol values. The power transmitter may accordingly estimate a modulation load pattern for the power transfer signal and determine the data symbol value based on this detected spreading chip sequence/modulation load pattern/chip sequence, e.g. by selecting the data symbol value that is most likely to have resulted in the received spreading chip sequence/load pattern/chip sequence (maximum likelihood demodulation).

In many embodiments, the variable load may be a binary variable load having two possible load values. Further, in many embodiments, the variable load 611 may be a purely resistive load or a purely reactive load. For example, the variable load may be a resistor or capacitor that can be switched between being decoupled from the input circuit and being coupled to the input circuit (e.g. effectively being switched on/off). The second communicator 609 may be arranged to control the switch that switches the resistor/ capacitor in out.

For example, the second communicator 609 may be arranged to switch in/out a communication capacitor (or other impedance) 611 e.g. positioned in parallel with the power receiver controller 601 or with the resonance capacitor 603 thereby being able to vary the resonance frequency and the loading of the power transfer signal.

The second communicator 609 may be coupled to the power receiver controller 601 and may be arranged to receive data from the power receiver controller 601 for transmission to the power transmitter 201.

For example, the second communicator 609 may receive power error control data from the power receiver controller 601 and may transmit corresponding power error control messages to the power transmitter 201 using load modulation. In operation, the system is typically arranged to control the drive signal such that the power transfer signal attains suitable operating parameters/ properties and such that the power transfer operates at a suitable operating point. In order to do so, the power transmitter is arranged to control a parameter of the drive signal using a power control loop where a power property of the power transfer signal/ drive signal is controlled in response to power control error messages that are received from the power receiver.

The power transmitter 201 and power receiver 203 use a load modulation approach (in the direction from the power receiver to the power transmitter) which modulate each symbol using a modulation chip sequence comprising a plurality of chips. The second communicator 609 is specifically arranged to transmit data symbols by load modulating the power transfer signal by a sequence of modulation load values corresponding to a chip spreading sequence. The second communicator 609 may transmit the data symbols using an approach that is e.g. similarly to a (D)DSSS modulation which uses a spreading chip sequence to modulate the data symbols. The data symbols/ bits are modulated by a (typically pseudorandom) bit spreading sequence also sometimes referred to as just a spreading sequence or a chip sequence. Each spreading-sequence "bit", which is commonly known as a chip, has a much shorter duration (larger bandwidth) than the original message bits/symbols.

Such an approach may allow reduced load depth resulting in reduced (or no) audible noise and rectified voltage ripple.

In some embodiments each symbol is represented by a spreading chip sequence comprising a plurality of chips, and typically with a sequence comprising 5 to 1023 chips. Thus, rather than simply varying the load in accordance with each symbol or bit, the second communicator 609 may be arranged to transmit a given symbol (typically a bit) by a series of load changes and variations where the changes and variations are different for each symbol. Specifically, a chip sequence may be defined for each symbol and when transmitting a given symbol, the second communicator 609 may retrieve the chip sequence for that specific symbol and proceed to load modulate the power transfer signal in accordance with the chip sequence for the symbol.

In many cases, each chip may be directly linked with a constant load level during the chip duration. For example, for binary chip values, each chip may be represented by the variable load 511 having one of two values, such as typically a modulation load (mostly a capacitor or resistor) being switched in or out of the circuit during the chip interval. Thus, a chip value of "0" may be represented by the modulation load being switched out and a chip value of "1" may be represented by the modulation load being switched in (or vice versa). In some embodiments, each chip may be differentially encoded, such as a load transition occurring or not, or with the direction of a transition indicating the chip value. For example, a chip value of "0" may be represented by the modulation load transitioning from a high load to a low load during the chip interval and a chip value of "1" may be represented by the modulation load transitioning from a low load to a high load during the chip interval (or vice versa).

In some embodiments, each chip of a chip sequence may be represented by a modulation loading transition occurring during the chip. Each load modulation chip in such case thus comprises at least two different modulation loading values/ values of the variable load. For example, as for a differential data symbol modulation, the individual chips may be modulated by a bi-state transition approach. For example, one chip value may be represented by a transition from a lower modulation loading to a higher modulation loading, and another chip value may be represented by a transition from a higher modulation loading to a lower modulation loading. In such examples, each chip sequence may be represented by a modulation loading pattern that has two modulation loading values for each chip.

Such an approach, also referred to as Differential-Direct Sequence Spread Spectrum (DDSSS), may provide substantial advantages by allowing a receiver to determine the chip values simply by considering the difference between two measured load values for each chip. However, further it may increase the switch rate and may make this more predictable thereby allowing an improved correspondence between the switch operation in the communication time intervals and the non-communication time intervals.

In some embodiments, the spreading chip sequence for each possible data symbol value may accordingly comprise a load spreading chip sequence of at least 5, and in some cases at least 7, 11, 15, 31, or 63 load modulation chips.

The power transmitter may detect the load modulation by considering the whole chip sequence, and specifically may seek to determine the received symbol as the one for which the measured load variation chip pattern most closely matches the chip sequence pattern for that symbol.

Thus, in some embodiments a direct sequence spread spectrum load modulation may be used with each data symbol value being represented by a different spreading chip sequence / loading pattern.

Such an approach may in particular allow the modulation depth, i.e. the magnitude of the load variations to be reduced substantially which may for example reduce electromagnetic noise and interference, may reduce acoustic noise, and may reduce the probability and effect of power signal oscillations. It may also in many embodiments result in improved signal to noise ratios and may result in a substantially improved and often more reliable communication with e.g. often a lower bit error rate. Thus, a general overall improved power transfer can be achieved.

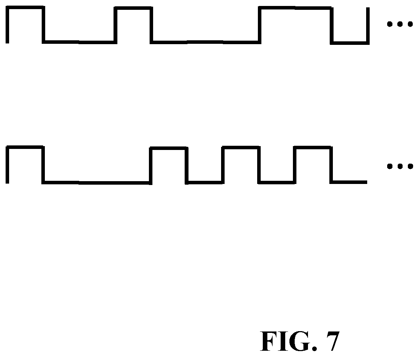

FIG. 7 illustrates an example of parts of two possible spreading chip sequences/ loading patterns. Each chip sequence comprises a sequence of chips. Typically, the set of chip values is two, corresponding to a binary chip sequence. A symbol time is thus divided into a plurality of chip intervals with the chip sequences of the chips being different for different data symbols. Typically, each sequence includes at least ten chips, and often substantially more. In many embodiments, each chip sequence may have a length of 2^{N}-1 where N is an integer of typically no less than 4.

Each of a number of stored chip sequences may be assigned to one symbol. Thus, each possible data symbol value that may need to be transmitted to the power transmitter may have a linked/ associated spreading chip sequence / modulation loading pattern. For example, where only two data symbols are possible, i.e. where a binary communication is implemented, the set of chip sequences may comprise only two chip sequences. Each possible data symbol value may be linked/ represented by one spreading chip sequence. Thus, for a given data symbol value to be transmitted, the corresponding/ linked spreading chip sequence is determined and modulated on to the power transfer signal by load modulation. For example, where only two data symbols are possible, i.e. where a binary communication is implemented, the set of chip sequences may comprise only two chip sequences.

In many embodiments, one or more chip sequences may be represented by a relationship to another chip sequence. For example, for binary communication, the second communicator 609 may store a single spreading chip sequence corresponding to one of the binary data values. The chip sequence for the other binary data value may be represented by the same stored bit sequence as it may be given as the inverse of the stored bit sequence. Thus, often the set of chip sequences utilizes complementary inverse chip sequences for pairs of data symbols and therefore only half of the used chip sequences are typically explicitly stored/ determined in the second communicator 609 with the remaining chip sequences being automatically and implicitly stored/ determined as the inverse of these.

Thus, in some embodiments, the spreading chip sequences may include inverse chip sequences. Equivalently, the same spreading chip sequence can be considered to represent two data symbol values, and specifically two binary data symbol values.

The spreading chip sequence is for a given data symbol to be transmitted selected from a set of spreading chip sequences, and in the example the second communicator 609 provides a set of spreading chip sequences with each chip sequence being linked to a data symbol value. Typically, the set of spreading chip sequences comprises a chip sequence for each possible data symbol value. For example, if binary communication is used, the first set of chip sequences may comprise only two chip sequences. It will be appreciated that the second communicator 609 may store the chip sequences in any suitable form and does not need to store a full sequence for each possible data symbol. For example, a given spreading chip sequence may be multiplied by a binary symbol value represented by the values 1, -1. At the receiving end, i.e. at the power transmitter, the data value may then be determined by a correlation with the given spreading chip sequence, and a determination of the corresponding binary data value dependent on whether this is a positive or negative correlation.

In many embodiments, binary communication may accordingly be used where only two data symbol values are possible (corresponding to a "0" bit value or a "1" bit value). In such cases, one bit value may be represented by a given chip sequence and the other bit value may be associated with the inverse bit sequence, i.e. the bit sequence that results from changing each chip value to the opposite value. The two bit sequences are thus typically complementary with one resulting from the other by multiplication by -1 (with the chip values being represented by +1 and -1).

A particular advantage in such a case is that demodulation is particularly easy as a single correlation can be used to differentiate between bit values as the magnitude of the correlation is the same for the chip sequences, but the signs of the correlation values are opposite.

It will be appreciated that it is equivalent to consider data symbols represented by inverse spreading chip sequences to be represented by one chip sequence or by two chip sequences. It will be appreciated that such a binary approach with two inverse chip sequences being used is equivalent to considering that the two possible binary values are modulated by the same chip sequence but with the data symbols having opposite data values (e.g. +1 and -1).

When the power receiver is about to transmit a data symbol, the value is fed to the second communicator 609 from the power receiver controller 601 which proceeds to determine the chip sequence that is linked to the data symbol value to be transmitted.

The second communicator 609 is arranged to modulate the chip sequence onto the power transfer signal. Specifically, a modulation load may be switched in and out (on/off) in line with the chips, i.e. the load may be changed in accordance with the variable load values of the spreading chip sequence/ loading pattern.

The chip sequence is selected from a set of chip sequences, and in the example the second communicator 609 stores such a set of chip sequences with each chip sequence being linked to a data symbol value. Typically, the set of chip sequences comprises a chip sequence for each possible data symbol value. For example, if binary communication is used, the first set of chip sequences may comprise only two chip sequences.

Thus, the second communicator 609 may be arranged to receive data symbols, typically from the power receiver controller 601, to be transmitted to the power transmitter, it may proceed to determine a corresponding chip sequence and load modulate the power transfer signal by the spreading chip sequence representing this chip sequence. Typically, the data symbols are binary but in some cases higher order modulation symbols may be used (i.e. with more than two possible values). In some cases, such higher order data symbols may correspond to a combination of received data bits. For example, two bits may be combined into a single quaternary data symbol. Such combination may be possible both when the data bits are related and when they are e.g. completely independent.

Longer chip sequences may provide improved noise suppression etc. but may also reduce the data rate as the symbol time increases for a given chip rate. Increased chip sequence lengths also increase complexity and resource demand, especially at the receiver where correlation with longer sequences may substantially require the number of computations required.

The chip sequences in the set are typically of the same length.

The first communicator 309 of the power transmitter 201 may as previously mentioned sample a current, voltage, or power of the transmitter coil 203 (or a related value such as a value of the drive signal or the supply signal to the inverter of the driver 301). It may then determine load values for each chip based on the sampled measurement, and indeed in many cases the measurement value may be used directly. The first communicator 309 may in some cases determine a binary received chip sequence, e.g. by selecting for each chip whether the measured load value is a high or low load value. In cases where differential encoding of the chip values is performed, the first communicator 309 may for example sample the signal/property twice in each chip time interval and determine the corresponding chip value depending on the direction/sign of the difference between the measurements. It will be appreciated that in some embodiments, the received chip sequence may be represented by hard decision data symbols/values (such as binary values) or may e.g. be determined as soft decision symbols/values (e.g. representing the magnitude of the difference in addition to the sign of the difference).

The first communicator 309 is arranged to determine load modulation data symbols received from the power receiver based on a correlation of the stored data symbol spreading chip sequences and the load variations of the power transfer signal. Specifically, in some embodiments, the first communicator 309 may correlate the determined received chip sequence provided by the first communicator 309 with all the stored/possible data symbol chip sequences to determine a correlation value for each. In cases, such as the described binary case where some sequences are the inverse of each other, only one correlation may be performed with the sign of the correlation value reflecting the two possible chip sequences.

Thus, the first communicator 309 may correlate the receiver load variation sequence with the reference chip sequence(s) to determine a correlation value indicating how closely these match each other. The first communicator 309 may then determine the data symbol as one linked with the chip sequence for which the associated correlation value is sufficiently high.

The approach of using such (D)DSSS type communication in the described system may provide a number of advantages. The approach may in particular allow the modulation depth, i.e. the magnitude of the load variations to be reduced substantially which may for example reduce electromagnetic noise and interference, may reduce acoustic noise, and may reduce spurious oscillations. It may also in many embodiments result in improved signal to noise ratios and may result in a substantially improved and often more reliable communication with e.g. often a lower bit error rate. Thus, a general overall improved power transfer can be achieved.

Further, the use of such spreading chip sequences/ modulation loading patterns may substantially reduce the switch noise/ voltage variations. The use of such longer sequences may reduce the modulation depth and the required change in modulation loading may be reduced. For example, a lower value of a switch capacitor may be implemented. This reduction may result in a smaller change in the resonance frequency/ operating point resulting in lower noise/ variations. Further, the approach allows for a much higher modulation loading switching, and indeed requires it for the same symbol rate to be maintained. The faster switching may further reduce the noise/ voltage variations as it is spread over a larger frequency range including higher frequencies. This results in the smoothing capacitor and the low pass filtering effect thereof being more efficient thereby providing a reduced noise level.

The described system uses a specific approach for initializing a power transfer, and in particular employs a specific approach for adapting and setting up communication for the power transfer. The arrangement is particularly arranged to setup communication in a way that both supports efficient operation for power transmitters that comprise a plurality of transmitter coils supporting a plurality of power transfers to different power receivers and providing backwards compatibility with power receivers having different communication capability.

The approach may in particular set up spread spectrum load modulation from the power receivers such that the interference between different power transfer operations and power receivers is reduced thereby typically providing a more reliable and improved power transfer. The approach is in many applications in particular directed to setting up multiple power transfer operations with different power receivers such that these, to the extent possible/feasible, use different spreading chip sequences. The use of spread spectrum techniques and with different chip sequences being applied to different power transfers/power receivers may substantially reduce the cross-interference between the electromagnetic fields/power transfer signals and the load modulations of these.

In the approach, the power transmitter and power receiver interact to initialize power transfer including setting up an efficient spread spectrum load modulation scheme (if feasible).

The power transmitter controller 307 and the power receiver controller 601 are arranged to respectively control the power transmitter 201 and the power receiver 205 to go through a process and series of steps that will result in the setting up of a new spread spectrum load modulation communication scheme for use during the subsequent power transfer.

The approach may in particular be compatible with the standard approach of power transfer initialization for Qi wireless power transfer systems.

A Qi wireless power transfer system may operate in different modes or phases. In particular, in order to initiate a power transfer, a Qi system may proceed via different phases, in particular a selection phase, a ping phase, an identification and configuration phase, and a power transfer phase, as well as potentially some optional phases such as a negotiation phase and a calibration phase. More information may e.g. be found in chapter 5 of part 1 of the Qi wireless power specification.

In the approach of Qi, a power transmitter may be in a selection phase wherein it merely monitors for the potential presence of a power receiver. The power transmitter may use a variety of methods for this purpose, e.g. as described in the Qi wireless power specification.

If a potential presence of a power receiver is detected, the power transmitter may enter a ping phase in which a power transfer signal is temporarily generated. The power receiver can use the received signal to power up its electronics. After receiving the power transfer signal, the power receiver can communicate an initial packet to the power transmitter. Specifically, a signal strength packet indicating the degree of coupling between power transmitter and power receiver is transmitted. More information can be found in chapter 6.3.1 of part 1 of the Qi wireless power specification. Thus, in the Ping phase it is determined whether a power receiver is indeed present at the interface of the power transmitter.

Upon receiving the signal strength message, the power transmitter moves into an Identification & Configuration phase. In this phase, the power receiver will keep the output load disconnected and communicate with the power transmitter using load modulation. The power transmitter provides a power transfer signal of constant amplitude, frequency and phase for this purpose (with the exception of the change caused by load-modulation). The messages are used by the power transmitter to configure itself as requested by the power receiver 105. The messages from the power receiver are not communicated continuously but are communicated in intervals.

Following the Identification and Configuration phase, the system may move on to the power transfer phase where the actual power transfer takes place. Specifically, after having communicated its power requirement, the power receiver can connect the output load and supply it with the extracted power. The power receiver then monitors the output load and measures the control error between the actual value and the desired value of a certain operating point. It communicates such control errors to the power transmitter at a minimum rate of e.g. every 250 ms to indicate these errors to the power transmitter 101 as well as the desire for a change, or no change, of the power signal. Thus, in the power transfer phase, the power receiver also performs load modulation of the power signal in load modulation intervals in order to communicate information to the power transmitter.

Instead of progressing directly from the Identification and Configuration phase to the power transfer phase, the system may, when the power transmitter and power receiver both have the required capability, instead proceed to a Negotiation phase in which various operating parameters are determined by a communication interaction between the power receiver and the power transmitter. It may also proceed to a Calibration phase which may in particular be used to calibrate a foreign object detection algorithm. If the Negotiation phase and the Calibration phase are successful, the system proceeds to the power transfer phase.

The power transmitter 201 and power receivers 207, 209 may be arranged perform a power transfer initialization that sets up a suitable spread spectrum load modulation communication scheme and which may typically further be in line and compatible with the Qi approach.

Specifically, the power transmitter controller 307 may be arranged to control the power transmitter to perform the described Qi steps/phases and the power receiver controller 601 may be arranged to control the power receiver to perform the described Qi steps/phases.

The power transmitter controller 307 may be arranged to initialize a power transfer with a power receiver which in the following will be considered to be power receiver 207. The power transmitter coil 103 may proceed to initialize the power transfer by first communicating with the power receiver using a predetermined default (load) modulation scheme for communication from the power receiver to the power transmitter. For example, a Qi power transmitter may detect the presence of a power receiver and proceed to the ping and Identification & Configuration phase using the conventional Qi spread spectrum load modulation communication scheme which is a standard load modulation scheme with each binary data value being represented by a (high or low) modulation load setting/value.

Similarly, the power receiver controller 601 may control the power transmitter to initiate power transfer, e.g. in response to detecting a power transfer signal being present. For example, this may power up relevant electronics of the power receiver 207 which may start the initialization phase. This first step may include the power receiver communicating with the power transmitter and with this communication including the second communicator 609 transmitting messages to the power transmitter 201 using the predetermined default modulation scheme, such as specifically the conventional Qi modulation scheme.

The predetermined default modulation scheme is accordingly a modulation scheme that the power transmitter and power receiver are arranged to use for initial communication from the power receiver to the power transmitter. The predetermined default modulation scheme may be a(ny) given modulation scheme that the power transmitter/power receiver is arranged to use initially or upon start-up. The predetermined default modulation scheme may thus be the initial modulation scheme and may be used independently of and without knowledge of any properties or characteristics of the other device/entity and/or of the power transfer itself. The predetermined default modulation scheme may also be referred to as a reference or given modulation scheme.

During the initialization process, the power transmitter controller 307 may control the first communicator 309 to transmit a communication capability message to the power receiver 207. The communication capability message may be transmitted using a suitable modulation scheme for the communication from the power transmitter 201 to the power receiver 207.

The communication capability message includes an indication of a capability of the power transmitter to support a spread spectrum load modulation communication scheme for transmissions from the power receiver to the power transmitter. Thus, the communication capability message informs the power receiver 207 that the power transmitter 201 does indeed have the capability to support a spread spectrum load modulation communication scheme, and thus that it can support spread spectrum communication, such as DSSS or DDSSS.

The communication capability message further comprises an indication/identification of a set of one or typically more spreading chip sequences. The set of a least one spreading chip sequence, henceforth also referred to as the sequence set, may be a set of available spreading chip sequences that can be used for the spread spectrum communication. Thus, rather than the spread spectrum communication having to use fixed predetermined spreading chip sequences, the communication capability message indicates to the power receiver that one or more specific spreading chip sequences should/may be used for the spread spectrum load modulation communication scheme.

The power receiver 207 may receive the communication capability message from the power transmitter. In response, it may then proceed to transmit a spread spectrum modulation request message to the first power receiver. The spread spectrum modulation request message is a request for the power transmitter to switch from using the predetermined default modulation scheme to using the spread spectrum load modulation communication scheme.

In response to receiving the spread spectrum modulation request message, the power transmitter controller 307 is arranged to switch the first communicator 309 from a first mode in which messages from the first power receiver are received using the predetermined default modulation scheme to a second mode in which (subsequent) messages from the first power receiver are received using the spread spectrum load modulation communication scheme and using a spreading chip sequence, henceforth referred to as the first spreading chip sequence, which is included in the sequence set.

The power transmitter controller 307 may further control the first communicator 309 to transmit a spread spectrum modulation confirmation message to the power receiver 207. The message may positively confirm the request for switching to the spread spectrum load modulation communication scheme received from the power receiver 207. Thus, the spread spectrum modulation confirmation message provides information/an indication to the power receiver 207 that the power transmitter 201 accepts the transition to the spread spectrum load modulation communication scheme with the spreading chip sequence from the sequence set.

In response to receiving the spread spectrum modulation confirmation message from the power transmitter, the power receiver controller 601 switches the second communicator 609 from transmitting messages to the power transmitter using the predetermined default modulation scheme to transmitting (subsequent) messages to the power transmitter using the spread spectrum load modulation communication scheme using a spreading chip sequence from the set of spreading chip sequences.

At the end of the process, both the power transmitter 201 and the power receiver 207 have switched from using the predetermined default modulation scheme to using the spread spectrum load modulation communication scheme with this specifically using a spreading chip sequence from the sequence set. The approach provides a highly efficient and reliable way of setting up the load modulation communication from the power receiver to the power transmitter. It allows substantial control to be retained at the power receiver while at the same time allowing the power transmitter substantial control over which spreading chip sequence(s) is(are) used for the spread spectrum communication. Thus, specifically, while allowing substantial interaction and control by the power receiver, the approach still allows the power transmitter to control the use of spreading chip sequence such that this can be selected to provide improved performance. In particular, it allows the power transmitter to control the used spreading chip sequence(s) such that there is no conflict with spreading chip sequences used for other power receivers supported by the power transmitter. Indeed, the power transmitter can select the sequence set sent to the power receiver to only include spreading chip sequences that have very low cross-correlation with spreading chip sequences already in use, and thus this will reduce cross interference substantially and provide improved overall performance. The approach may in particular provide improved communication and operation for power transmitters with multiple transmitter coils capable of simultaneously supporting multiple power transfers/power receivers.

Further, the approach allows for such an improved approach and communication to be introduced to systems having devices with different capabilities including where some power receivers may not have the required functionality for supporting spread spectrum communication, or the adaptation of which spreading chip sequence to use. Indeed, in such cases, if the expected responses/messages are not received, the power transmitter and power receiver will not proceed to switch to the spread spectrum load modulation communication scheme but will remain using the predetermined default modulation scheme.

In many embodiments, the predetermined default modulation scheme will be a legacy or common modulation scheme for all devices deployed in the system.

The sequence set may specifically be a subset of default/reference/predetermined set of spreading chip sequences that may be used for spread spectrum communication. For example, specifications/standards for the wireless power transfer systems may define a reference set of spreading chip sequences that can be used for spread spectrum communication. The power transmitter may proceed to select a subset of these spreading chip sequence for the specific spread spectrum communication with the new power receiver 207. In particular, the power transmitter may select the sequence set to include only spreading chip sequences that are not used for/allocated to any other spread spectrum communication supported by the power transmitter, and specifically it may exclude all spreading sequences that are used for communication with any other power receiver supported by the power transmitter. Accordingly, the sequence set may be used to provide a set of spreading chip sequences to the power receiver where none of the spreading chip sequence are in use for spread spectrum load modulation communication with any other power receiver supported by the power transmitter.

The communication capability message may be transmitted after an initial exchange of one or more messages to exchange information and to configure one or more parameters or characteristics. In particular, the communication capability message may be transmitted after one or more properties of the power transfer has been established or agreed. In particular, the communication capability message may be transmitted after messages have been exchanged to set a power level or maximum power limit for the power transfer. This may be advantageous in many scenarios, such as in embodiments where e.g. a specific sequence (likely length) is selected for different power levels.

The indication of the sequence set may be in any suitable way and similarly the indication of individual spreading chip sequences may be in any suitable way. In many embodiments, a spreading chip sequence may be indicated as one of an explicit chip pattern, a polynomial, an index to a predetermined table of spreading chip sequences (known in advance by the power receiver).

The power transmitter may in some cases be arranged to simply transmit an indication of a sequence set that includes all spreading chip sequences that may be used, e.g. it may transmit a sequence set including all Barker sequences or codes in a predetermined set. In such cases, the power receiver may simply (randomly) select a sequence which is likely to result in different spreading chip sequences being used for different power transfers (if the sequence set includes enough spreading chip sequences). If a conflict occurs where different power receivers happen to select the same sequence resulting in unacceptable interference, the power transmitter may initialize a re-initialization of the spread spectrum communication resulting in another spreading chip sequence being selected.

However, in many cases, the power transmitter may be arranged to select the spreading chip sequences for the sequence set depending on current operational properties for the power transmitter, including typically in dependence on the communication properties/parameters for other ongoing power transfers and communications with other power receivers. The power transmitter may specifically be arranged to select the spreading chip sequence for the sequence set in dependence on which spreading chip sequences have already been allocated and are used for other power transfers to communicate with other power receivers.

In many embodiments, the power transmitter may be arranged to select the sequence set to include only spreading chip sequences that are not allocated to or used by other power transfers or for communication with any other power receiver.

For example, a set of available spreading chip sequence may be predetermined, such as e.g. a suitable set of Barker sequences with appropriate correlation properties. If no other power transfer is currently ongoing, the power transmitter may when initializing a new power transfer proceed to send an indication of a sequence set that includes all the Barker sequences. The communication may then be set up to use one of these spreading chip sequences.

When a second power transfer is subsequently initialized, the power transmitter may generate a sequence set that includes all the spreading chip sequences of the predetermined set except for the one that is used by the power transfer already set up. This approach may be repeated, and the power transmitter may whenever setting up a new power transfer proceed to generate a sequence set that includes all spreading chip sequence not already allocated/in use.

It will be appreciated that other algorithms or decision/selection criteria may be used. For example, in some cases, only a subset (or indeed only one) of the unused and unallocated spreading chip sequences may be included in the sequence set. For example, some sequences may be preferred to other sequences (e.g. due to their particular correlation properties with already used spreading chip sequence) and the sequence set may be generated to only include the preferred spreading chip sequence(s). As another example, in some cases, the sequence set may be generated to include one or more spreading chip sequences that are already in use by another power transfer of the power transmitter. For example, if the power transmitter has multiple transmitter coils, the physical arrangement may be such that interference between some transmitter coils is substantially more likely/significant than interference between some other transmitter coils. This may be taken into consideration when generating the sequence set and may allow reuse of spreading chip sequences. For example, the power transmitter may be arranged to generate a sequence set for a new power transfer to exclude all spreading chip sequences that are used by power transfers for transmitter coils that are close to the transmitter coil for which the power transfer is being setup (using a suitable threshold) while including spreading chip sequences that are used for power transfers for transmitter coils that are further away from the current transmitter coil.

In some scenarios and embodiments, the power transmitter may generate the sequence set to include only a single spreading chip sequence and the power receiver may be arranged to proceed to use the spread spectrum load modulation communication scheme with the spread spectrum load modulation communication scheme of the sequence set.

In many embodiments, the power transmitter may be arranged to generate the sequence set to include a plurality of spreading chip sequences, such as specifically to include all spreading chip sequences of a predetermined set that are not currently in use by other power transfers and power receivers.

In such cases, the power receiver may be arranged to select a spreading chip sequence from the sequence set and it may then proceed to perform the spread spectrum communication using the selected spreading chip sequence. The power receiver may further transmit an indication of the selected spreading chip sequence to the power transmitter. Such a spreading chip sequence identification may specifically be transmitted as part of (or even be considered to be) the spread spectrum modulation request message. In response, the power transmitter may be arranged to switch to the second mode of operation where the spread spectrum load modulation communication scheme is employed using the selected/indicated spreading chip sequence.

Thus, in some embodiments, the power receiver may be arranged to control which spreading chip sequence is being used within the constraints imposed by the power transmitter. Such an approach may in many embodiments be highly advantageous in allowing the main control and initiative to reside with the power receiver while still allowing the power transmitter to impact this to provide coordination between different power transfer operations. Such an approach may in particular be in line with the underlying philosophy and approach of e.g. a Qi wireless power transfer system while allowing the communication for multi-power transfer operations to be improved. It may also provide improved backwards and forwards compatibility in many cases. For example, if the functionality is increased by additional spreading chip sequences (e.g. of a different length) are introduced to a deployed system, new power transmitters may still be able to function with legacy power receivers that cannot use such new spreading chip sequences.

In some cases, the power receiver may simply select a random spreading chip sequence from the sequence set. In other cases, the power receiver may select a spreading chip sequence that it can support while ignoring spreading chip sequences that it cannot support (e.g. due to being an older power receiver). As another example, the power receiver may generate a sequence based on information provided by power transmitter, or just use the sequence as it was provided by the power transmitter.

In many embodiments, the predetermined default modulation scheme is a non-spread spectrum modulation scheme. For example, it may be a NRZ load modulation scheme where each data symbol is represented by one modulation load value, such as a high and low load for binary communication. In Qi power transfer systems, the predetermined default modulation scheme may specifically be conventional load modulation scheme defined in the early versions of the Qi Specifications. Thus, specifically, the predetermined default modulation scheme may be aNRZ load modulation as previously described.

Such an approach may be used to provide improved backwards compatibility and may allow power transfer initialization to be suitable for legacy power receivers which do not have any capability for spread spectrum communication. Further, in many cases, it may allow low complexity operation that often may e.g. allow low power operation which may for example support power receivers to extract sufficient power even for low power signals.

However, in other embodiments, the predetermined default modulation scheme may itself be a spread spectrum modulation scheme. In such a case, the predetermined default modulation scheme may use a default/reference/predetermined spreading chip sequence. For example, the Specifications for the wireless power transfer system may prescribe that initial communications from a power receiver to a power transmitter when initializing a new power transfer should be performed using spread spectrum modulation with a specific spreading sequence.

The specific spreading sequence may be one that is selected to have advantageous correlation properties with all other spreading sequences that may be used subsequently. For example, a set of available spreading sequences may be predefined to be available for load modulation communication. For example, for a given spreading sequence, a set of Barker sequences may be determined which has high auto-correlation when aligned in time but low auto-correlation when not aligned in time as well as low cross-correlation between sequences. Out of this set, one Barker sequence may be defined to be used (only) for initial start-up communications (or more general may be used only for the predetermined default modulation scheme). During start-up, the power transmitter may then transmit the sequence set with this set not including the default sequence. The power transmitter and power receiver may then, as described, switch to a second spread spectrum load modulation communication scheme using a spreading chip sequence selected from the sequence set. The sequence set may be selected to exclude spreading chip sequences that are already in use for other power receivers/power transfers as well as the default spreading chip sequence. This may ensure that existing power transfer operations cause substantially reduced cross-interference to any other power transfer as well as to any power transfer initialization approach.

In many scenarios, using a spread spectrum default modulation scheme may provide improved resilience in the power transfer initialization process.

In some embodiments, the communication capability message may include an indication of the required modulation depth for the spread spectrum load modulation by the power receiver. The communication capability message may for example indicate the load change required between different modulation states (e.g. of the chips). In some cases, an absolute value may be provided but in other cases the required modulation depth may be a coarse and potentially relative indication. For example, the communication capability message may simply indicate whether the load modulation depth should be "small", "medium" or "high".

In some cases, the power transmitter may be arranged to statically transmit the same indication. For example, for power transmitters that for practical reasons are arranged to have a relatively large distance between the transmitter coil and the receiver coil, as well as between different transmitter coils, may always transmit an indication that the modulation depth should be "high".

However, in many embodiments, the power transmitter may dynamically determine a suitable modulation depth and indicate this. For example, the power transmitter may determine a likely current interference level between communications of different power transfers, and may set the required modulation depth accordingly. For example, for a high current level of interference, the communication capability message may request a high modulation depth and for a low current level of interference, the communication capability message may request a low modulation depth. In some cases, the interference may simply be estimated by the number of currently active power transfers and the required modulation depth may be determined directly as a function of how many power transfer operations are currently active.

Alternatively or additionally, other parameters may be considered. For example, the required modulation depth may be determined as a function of the requested power level for the power transfer operation.

The communication capability message may in some embodiments be a dedicated message that is transmitted to the power receiver specifically for the purpose of setting up a spread spectrum communication. However, in many embodiments, the indication of the capability to operate using spread spectrum communication and the indication of the sequence set may be included in messages that also provide other data and information, and in particular which provide information of other capabilities of the power transmitter. In some cases, the communication capability message may provide information of the capability of the power transmitter to support (other) communication and modulation formats. In some embodiments, the communication capability message may also provide information on e.g. power transfer operational parameters that can be supported by the power transmitter (such as e.g. the maximum power level that can be supported).

In particular, the power transmitter may be a Qi compatible power transmitter and the communication capability message may specifically be one of a Power Transmitter Capabilities (CAP) data packet, a Power Transmitter Extended Capabilities (XCAP) data packet, and an Extended Power Transmitter Extended Capabilities (ECAP). This may allow particularly advantageous operation and allow additional capability to be added while requiring only minor modifications to support and be compatible with the Qi Specifications.

It will be appreciated that the communication capability message may be transmitted in one continuous data transmission/part or may be split into a plurality of transmissions/parts that are transmitted separately (i.e. the communication capability message may be made up of a plurality of sub-messages e.g. with one indicating the capability of the power transmitter to support spread spectrum and another sub-message indicating the sequence set).

In many embodiments, the power transmitter may be arranged to transmit the communication capability message (only) in response to receiving a spread spectrum modulation request message from the first power receiver. The spread spectrum modulation request message may indicate that the power receiver is capable of spread spectrum communication and request that the power transmitter initiates a switch to the spread spectrum load modulation communication scheme by transmitting the communication capability message. Such an approach may allow the power receiver to be in control of/instigate the switch to using the spread spectrum load modulation communication scheme, which in particular may be in line with the underlying principles and design philosophy of e.g. Qi wireless power transfer.

The switching to the mode of operation using the spread spectrum load modulation communication scheme may in some embodiments simply result in the power receiver and the power transmitter continuing the power transfer/power transfer initialization while using the spread spectrum load modulation communication scheme for the transmissions from the power receiver to the power transmitter.

It will be appreciated that the timing of the different operations may be different in different embodiments. For example, rather than immediately responding to a message or immediately switching to a different communication mode/scheme, the power receiver and/or power transmitter may introduce a delay before performing the action. In particular, a given operation may be delayed until the system enters a different phase or some other event occurs or message is received. For example, the use of the spread spectrum load modulation communication scheme may in some embodiments be agreed during power transfer initialization but with the switch only occurring upon entering the power transfer phase.

In some cases, the system may be arranged to reinitialize/renegotiate the communication after having entered the spread spectrum communication mode. Specifically, while operating using the spread spectrum load modulation communication scheme, the power transmitter may transmit a further communication capability message to the power receiver. This may restart a communication set up as described to be performed again. Specifically, the communication capability message may include a new sequence set and the power receiver may proceed to respond to select one of these and respond with a new spreading chip sequence selected from this new sequence set. The power transmitter and power receiver may then proceed to switch to this new spread spectrum load modulation communication scheme and proceed to communicate using spread spectrum communication with the selected spreading chip sequence.

In some embodiments, the switching to the spread spectrum communication (e.g. during startup, initialization, and or re-initialization) may include other operations than simply changing the spreading chip sequence used, or even just changing communication parameters.

In particular, in many scenarios the power transfer controller may further be arranged to change a frequency of the power transfer signal for a given power receiver when switching the communicator from the first mode to the second mode, i.e. from the predetermined default modulation scheme to the spread spectrum load modulation communication scheme.

For example, the power transmitter may proceed to higher power transfer signal frequency to safely deliver higher power, for example it may proceed to set the frequency of the power transfer signal to 360 kHz to deliver at least 15, 25 or 50W.

In some cases, the switching from the predetermined default modulation scheme to the spread spectrum load modulation communication scheme includes a full re-initialization of the power transfer initialization. In such cases, the power transmitter and power receiver may restart the process using the spread spectrum load modulation communication scheme. Thus, in such cases, messages and the setting up of power transfer parameters may be repeated using spread spectrum communication.

For example, the power transmitter may proceed to restart the initialization process to change the frequency of the power transfer signal, e.g., it may restart the initialization in order to set the frequency to 360 kHz to prepare transition to at least 15, 25 or 50W power delivery.

In some cases, only some messages/interactions performed using the predetermined default modulation scheme may be repeated using the spread spectrum load modulation communication scheme.

It will be appreciated that a single chip sequence is often used to represent two data symbols (with effectively the spreading chip sequence for one data symbol being the inverse of the other). Thus, for binary communication, a spread spectrum receiver may simply correlate the received signal with one spreading chip sequence and select the data symbol value depending on whether a sufficiently large positive or negative correlation value results.

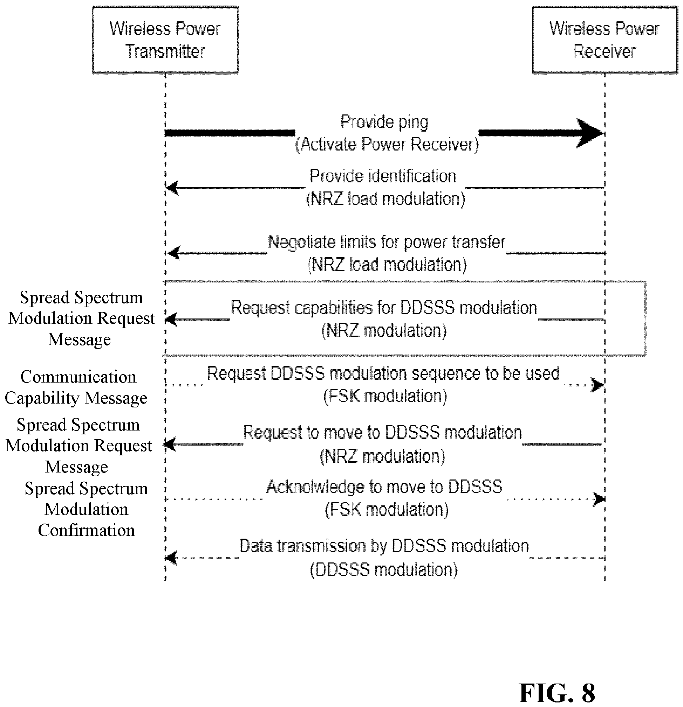

A particular example of the described approach suitable for implementation with Qi wireless power transfer systems is shown in FIG. 8. In this example, the following approach may be used:
- During the negotiation phase of the Qi protocol (when it is already decided that the power receiver and the power transmitter agree on a certain power level), the power transmitter may indicate in a capability packet (e.g. CAP - 0x31 or XCAP - 0x32 or ECAP - 0x8F:1 packet according to Qi 2.0.0 specification) the spreading chip sequence that it requires the power receiver to use.
   ∘ Such a sequence can e.g. be provided as a sequence of chips, a polynomial, or an index of a pre-defined sequence set.
   ∘ Other properties of the sequence might be dictated by the capabilities packet, such as:
      ▪ Differential chip rate (e.g. state change every cycle of the power signal, every two cycles of the power signal, or twice per cycle of the power signal)
      ▪ Modulation depth (Low-medium-high value of the modulation capacitor)
- In the negotiation phase, the power receiver may indicate the desired communication technology to be used during the later stages of the protocol. (by e.g. sending SRQ request according to Qi 2.0.0 specifications)
- Sequentially, the power transmitter acknowledges the request provided by the power receiver.
- After confirmation, the power receiver applies channel DDSSS load modulation with settings provided in the capability packet of the power transmitter.
- During the later stages of the power transfer protocol, such parameters of DDSSS communication can be re-negotiated by:
   o Either power transmitter or power receiver initiating re-initialization
      ▪ In particular, renegotiation may be initiated by the power receiver based on the request of the power transmitter.

It will be appreciated that the above description for clarity has described embodiments of the invention with reference to different functional circuits, units and processors. However, it will be apparent that any suitable distribution of functionality between different functional circuits, units or processors may be used without detracting from the invention. For example, functionality illustrated to be performed by separate processors or controllers may be performed by the same processor or controllers. Hence, references to specific functional units or circuits are only to be seen as references to suitable means for providing the described functionality rather than indicative of a strict logical or physical structure or organization.

The invention can be implemented in any suitable form including hardware, software, firmware or any combination of these. The invention may optionally be implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units, circuits and processors.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term comprising does not exclude the presence of other elements or steps.

Furthermore, although individually listed, a plurality of means, elements, circuits or method steps may be implemented by e.g. a single circuit, unit or processor. Additionally, although individual features may be included in different claims, these may possibly be advantageously combined, and the inclusion in different claims does not imply that a combination of features is not feasible and/or advantageous. Also the inclusion of a feature in one category of claims does not imply a limitation to this category but rather indicates that the feature is equally applicable to other claim categories as appropriate. The inclusion of a feature in a dependent claim of one independent claim does not imply a limitation to this independent clam but rather indicates that the feature is equally applicable to other independent claims as appropriate. Furthermore, the order of features in the claims do not imply any specific order in which the features must be worked and in particular the order of individual steps in a method claim does not imply that the steps must be performed in this order. Rather, the steps may be performed in any suitable order. In addition, singular references do not exclude a plurality. Thus, references to "a", "an", "first", "second" etc. do not preclude a plurality. Reference signs in the claims are provided merely as a clarifying example shall not be construed as limiting the scope of the claims in any way.

## Claims

1. A power transmitter (201) for wirelessly providing power to a plurality of power receivers (207, 209) via an electromagnetic power transfer signal, the power transmitter (201) comprising:
a plurality of transmitter coils (203, 205) each arranged to generate a power transfer signal for a power receiver of the plurality of power receivers (207, 209) when provided with a drive signal;
a driver (301) arranged to generate drive signals for the plurality of transmitter coils (203, 205);
a communicator (309) for communicating with the plurality of power receivers (207, 209), the communicator (309) being arranged to receive messages from the plurality of power receivers (207, 209) by demodulating load modulation of the power transfer signals;
a power transfer controller (307) arranged to:
initialize a power transfer with a first power receiver (207) of the plurality of power receivers (207, 209) including receiving first messages from the first power receiver (207) using a predetermined default modulation scheme;
transmit a communication capability message to the first power receiver, the communication capability message comprising an indication of a capability to support a spread spectrum load modulation communication scheme for transmissions from the first power receiver to the power transmitter, the communication capability message comprising an indication of a set of at least one spreading chip sequence;
receive a spread spectrum modulation request message from the first power receiver (207);
in response to receiving the spread spectrum modulation request message, switch the communicator (309) from a first mode in which messages from the first power receiver (207) are received using the predetermined default modulation scheme to a second mode in which (subsequent) messages from the first power receiver (207) are received using the spread spectrum load modulation communication scheme with at least a first spreading chip sequence from the set of spreading chip sequences.

2. The power transmitter of claim 1 wherein the power transfer controller (307) is arranged to select spreading chip sequences for the set of at least one spreading chip sequence depending on spreading chip sequences allocated for spread spectrum load modulation communication schemes for other power receivers of the plurality of power receivers.

3. The power transmitter of any previous claim wherein the power transfer controller (307) is arranged to select the first spreading chip sequence in dependence on a spreading chip sequence identification received from the power receiver.

4. The power transmitter of any previous claim wherein the predetermined default modulation scheme is a non-spread spectrum modulation scheme.

5. The power transmitter of any previous claim wherein the predetermined default modulation scheme is a spread spectrum modulation scheme using a default spreading chip sequence.

6. The power transmitter of any previous claim wherein the power transfer controller (307) is further arranged to change a frequency of the first power transfer signal when switching the communicator from the first mode to the second mode.

7. The power transmitter of any previous claim wherein switching the communicator from the first mode to the second mode comprises re-initializing the power transfer.

8. The power transmitter of any previous claim wherein the communication capability message includes an indication of required modulation depth for spread spectrum load modulation by the first power receiver (207).

9. The power transmitter of any previous claim wherein the power transmitter is a Qi power transmitter, and the communication capability message is one of a CAP message, an XCAP message, and an ECAP message.

10. The power transmitter of any previous claim wherein the power transfer controller (307) is arranged to transmit the communication capability message in response to receiving a spread spectrum modulation request message from the first power receiver.

11. The power transmitter of any previous claim wherein the power transfer controller (307) is further arranged to transmit a further communication capability message to the first power receiver (207) while the communicator (309) is in the second mode, and to change to use a different spreading chip sequence than the at least one spreading chip sequence in response to receiving a request for the different spreading chip sequence from the first power receiver (207), the different spreading chip sequence being a spreading chip sequence indicated as available in the further communication capability message.

12. A power receiver (207) for wirelessly receiving power from a power transmitter (201) via an electromagnetic power transfer signal, the power receiver (207) comprising:
an input circuit (211, 603) comprising a receiver coil (211) arranged to extract power from the power transfer signal;
a communicator (609, 611) arranged to communicate with the power transmitter (201) using load modulation of the power transfer signal for transmissions to the power transmitter;
a power transfer controller (601) arranged to:
initialize a power transfer with the power transmitter (201) including transmitting first messages to the power transmitter (201) using a predetermined default modulation scheme;
receive a communication capability message from the power transmitter (201), the communication capability message comprising an indication of a capability by the power transmitter (201) to support a spread spectrum load modulation communication scheme for transmissions from the power receiver (207) to the power transmitter (201), the communication capability message further comprising an indication of a set of at least one spreading chip sequence;
transmit a spread spectrum modulation request message to the power transmitter (201);
in response to receiving a spread spectrum modulation confirmation message from the power transmitter (201), switch the communicator (609, 211) from transmitting messages to the power transmitter (201) using the predetermined default modulation scheme to transmitting messages to the power transmitter (201) using the spread spectrum load modulation communication scheme using at least one spreading chip sequence from the set of spreading chip sequences.

13. A power receiver as claimed in claim 12 wherein the set of at least one spreading chip sequence comprises a plurality of spreading chip sequences and the power receiver (207) is arranged to select a first spreading chip sequence from the set of at least one spreading chip sequences, and to include an indication of the first spreading chip sequence in the spread spectrum modulation request message.

14. A method of operation for a power transmitter (101) wirelessly providing power to a plurality of power receivers (105) via an electromagnetic power transfer signal, the power transmitter (101) comprising:
a plurality of transmitter coils (203, 205) each arranged to generate a power transfer signal for a power receiver of the plurality of power receivers (207, 209) when provided with a drive signal;
a driver (301) arranged to generate drive signals for the plurality of transmitter coils (203, 205);
a communicator (309) for communicating with the plurality of power receivers (207, 209), the communicator (309) being arranged to receive messages from the plurality of power receivers (207, 209) by demodulating load modulation of the power transfer signals;
and the method comprises:
initializing a power transfer with a first power receiver (207) of the plurality of power receivers (207, 209) including receiving first messages from the first power receiver (207) using a predetermined default modulation scheme;
transmitting a communication capability message to the first power receiver, the communication capability message comprising an indication of a capability to support a spread spectrum load modulation communication scheme for transmissions from the first power receiver to the power transmitter, the communication capability message comprising an indication of a set of at least one spreading chip sequence;
receiving a spread spectrum modulation request message from the first power receiver (207);
in response to receiving the spread spectrum modulation request message, switching the communicator (309) from a first mode in which messages from the first power receiver (207) are received using the predetermined default modulation scheme to a second mode in which (subsequent) messages from the first power receiver (207) are received using the spread spectrum load modulation communication scheme with at least a first spreading chip sequence from the set of spreading chip sequences.

15. A method of operation for a power receiver (101) wirelessly receiving power from a power transmitter via an electromagnetic power transfer signal, the power receiver (101) comprising:
an input circuit (211, 603) comprising a receiver coil (211) arranged to extract power from the power transfer signal;
a communicator (609, 611) arranged to communicate with the power transmitter (201) using load modulation of the power transfer signal for transmissions to the power transmitter;
and the method comprises:
initializing a power transfer with the power transmitter (201) including transmitting first messages to the power transmitter (201) using a predetermined default modulation scheme;
receiving a communication capability message from the power transmitter (201), the communication capability message comprising an indication of a capability by the power transmitter (201) to support a spread spectrum load modulation communication scheme for transmissions from the power receiver (207) to the power transmitter (201), the communication capability message further comprising an indication of a set of at least one spreading chip sequence;
transmitting a spread spectrum modulation request message to the power transmitter (201);
in response to receiving a spread spectrum modulation confirmation message from the power transmitter (201), switching the communicator (609, 211) from transmitting messages to the power transmitter (201) using the predetermined default modulation scheme to transmitting messages to the power transmitter (201) using the spread spectrum load modulation communication scheme using at least one spreading chip sequence from the set of spreading chip sequences.
